# EUROPEAN PATENT APPLICATION

(11) **EP 4 465 694 A1**
(43) Date of publication of application: **20.11.2024**
(21) Application number: 24175816.8
(22) Date of filing: 14.05.2024
(51) Int. Cl.: H04W 36/00

(54) **CELL MEASUREMENTS**

(30) Priority: 15.05.2023 GB 202307198
(71) Applicant: Nokia Technologies Oy, 02610 Espoo (FI)
(72) Inventor: RYSGAARD, Bent Henneberg, 9220 AALBORG (DK); CAUDURO DIAS DE PAIVA, Rafael, 9200 AALBORG (DK); HOFMANN, Jurgen, 86504 MERCHING (DE)
(74) Representative: Script Intellectual Property LLP

(57) **Abstract**

Embodiments describe a terminal device comprising means for receiving first measurement configuration information scheduling a first measurement gap window for performing a first measurement. A first processing period precedes the first measurement window and a second processing period follows the first measurement gap window. The terminal device also comprises means for receiving second measurement configuration information scheduling a second measurement window for performing a second measurement. The terminal device also comprises means for performing the first and second measurements based on the first and second measurement configuration information respectively. The terminal device also comprises means for scheduling a first hardware adjustment period preceding the second measurement window and a second hardware adjustment period following the second measurement window. The first hardware adjustment period is scheduled to at least partially overlap with the first or second processing period, or the second hardware adjustment period is scheduled to at least partially overlap with the first or second processing period. Also described is a network node.

## Description

### Field

Example embodiments relate to apparatus, methods, and/or computer programs for measurements, in particular but not exclusively, measurements of cells in a mobile communications network.

### Background

In mobile communications networks, network nodes (such as a base station, eNodeB or gNodeB) cover a specific geographical area; typically referred to as a cell. In order to provide wider coverage, cells from multiple network nodes may overlap. A serving cell (or current cell) may provide coverage to a mobile communications device in that cell. A mobile communications device, or more generally a terminal device, may include a User Equipment (UE) such as a mobile phone.

In order to improve coverage, particularly when moving between cells, a terminal device may measure the signals from the network nodes in neighbour cells. For example, the terminal device may measure the signal strength or Reference Signal Received Power (RSRP) of the Synchronization Signal Block (SSB) in a serving or neighbouring cell.

In some examples, the terminal device may measure the signals during a measurement gap. In some examples, a network node schedules the measurement gaps for the terminal device such that no downlink or uplink scheduling occurs. During a measurement gap, a terminal device may perform tuning of a receive path to the target carrier or signal (i.e. the carrier or signal being measured). The terminal device may then measure the target carrier, for example RSRP of the SSB in one or more neighbouring cells. The terminal device may then tune the receive path back to an active channel of the serving cell.

There remains an ongoing need for further developments in this field.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a terminal device comprising: means for receiving first measurement configuration information scheduling a first measurement gap window for performing a first measurement, wherein a first processing period (for example, a first guard period/interval or proximity period/interval) precedes the first measurement gap window and a second processing period (for example, a second guard period/interval or proximity period/interval) follows the first measurement gap window; means for receiving second measurement configuration information scheduling a second measurement window (for example, a network controlled small gaps measurement) for performing a second measurement; means for performing the first and second measurements based on the first and second measurement configuration information respectively; and means for scheduling a first hardware adjustment period (for example, a first visible interruption length) preceding the second measurement window and a second hardware adjustment period (for example, a second visible interruption length) following the second measurement window, wherein the first hardware adjustment period is scheduled to at least partially overlap with the first or second processing period, or the second hardware adjustment period is scheduled to at least partially overlap with the first or second processing period.

In some example embodiments, the first hardware adjustment period is scheduled to at least partially overlap with the first processing period and to be disjointed from the second measurement window.

In some example embodiments, the second measurement window is configured to at least overlap with the second processing period.

In some example embodiments, the second hardware adjustment period is scheduled to at least partially overlap with the second processing period and to be disjointed from the second measurement window.

In some example embodiments, the second measurement window is configured to at least overlap with the first processing period.

In some example embodiments, the first measurement is performed via a first receiver chain of the terminal device.

In some example embodiments, the second measurement are performed via a second receiver chain of the terminal device.

In some example embodiments, the first and second measurements are measurements of neighboring cells for mobility.

In some example embodiments, the terminal device further comprises: means for transmitting, to a network node, first capability information indicative of a capability of the terminal device to schedule a hardware adjustment period preceding or following a measurement window independently from the scheduling of the measurement window.

In some example embodiments, the first capability information is indicative of a capability of the terminal device to schedule the hardware adjustment period to be disjointed from the measurement window.

In some example embodiments, the first capability information is determined responsive to a radio resource control configuration of the terminal device.

In some example embodiments, the first capability information is transmitted though radio resource control signaling as part of one or more of a UECapabilityInformation, UEAssistanceInformation or RRCReconfigurationComplete message.

In some example embodiments, the terminal device further comprises: means for transmitting, to a network node, second capability information indicative of a capability of the terminal device to allow a hardware adjustment period preceding or following a measurement window to at least partially overlap with a processing period preceding or following a measurement gap window.

In some example embodiments, the second capability information is determined responsive to a radio resource control configuration of the terminal device.

In some example embodiments, the second capability information is transmitted though radio resource control signaling as part of one or more of a UECapabilityInformation, UEAssistanceInformation or RRCReconfigurationComplete message.

According to a second aspect, there is described a network node comprising: means for providing, to a terminal device, first measurement configuration information scheduling a first measurement gap window for performing a first measurement, wherein a first processing period precedes the first measurement gap window and a second processing period follows the first measurement gap window; means for providing, to the terminal device, second measurement configuration information scheduling a second measurement window for performing a second measurement; means for receiving, from the terminal device, first capability information indicative of a capability of the terminal device to schedule a hardware adjustment period preceding or following a measurement window independently from the scheduling of the measurement window; and means for determining the second measurement configuration at least partly based on the first capability information.

In some example embodiments, the first capability information is indicative of a capability of the terminal device to schedule the hardware adjustment period to be disjointed from the measurement window.

In some example embodiments, the first capability information is received though radio resource control signaling as part of one or more of a UECapabilityInformation, UEAssistanceInformation or RRCReconfigurationComplete message.

In some example embodiments, the network node further comprises: means for receiving, from the terminal device, second capability information indicative of a capability of the terminal device to allow a hardware adjustment period preceding or following a measurement window to at least partially overlap with a processing period preceding or following a measurement gap window; and means for determining the second measurement configuration at least partly based on the second capability information.

In some example embodiments, the second capability information is received though radio resource control signaling as part of one or more of a UECapabilityInformation, UEAssistanceInformation or RRCReconfigurationComplete message.

In some example embodiments, communication with the terminal device is disallowed during the first measurement gap window, the first hardware adjustment period and the second hardware adjustment period.

In some example embodiments, communication with the terminal device is allowed during the second measurement window.

According to a third aspect, there is described a method comprising: receiving first measurement configuration information scheduling a first measurement gap window for performing a first measurement, wherein a first processing period precedes the first measurement window and a second processing period follows the first measurement gap window; receiving second measurement configuration information scheduling a second measurement window for performing a second measurement; performing the first and second measurements based on the first and second measurement configuration information respectively; scheduling a first hardware adjustment period that precedes the second measurement window and a second hardware adjustment period that follows the second measurement window, wherein the first hardware adjustment period is scheduled to at least partially overlap with the first or second processing period, or the second hardware adjustment period is scheduled to at least partially overlap with the first or second processing period.

In some example embodiments, the first hardware adjustment period is scheduled to at least partially overlap with the first processing period and to be disjointed from the second measurement window.

In some example embodiments, the second measurement window is configured to at least overlap with the second processing period.

In some example embodiments, the second hardware adjustment period is scheduled to at least partially overlap with the second processing period and to be disjointed from the second measurement window.

In some example embodiments, the second measurement window is configured to at least overlap with the first processing period.

In some example embodiments, the first measurement is performed via a first receiver chain of the terminal device.

In some example embodiments, the second measurement is performed via a second receiver chain of the terminal device.

In some example embodiments, the first and second measurements are measurements of neighboring cells for mobility.

In some example embodiments, the method further comprises: transmitting, to a network node, first capability information indicative of a capability of the terminal device to schedule a hardware adjustment period preceding or following a measurement window independently from the scheduling of the measurement window.

In some example embodiments, the first capability information is indicative of a capability of the terminal device to schedule the hardware adjustment period to be disjointed from the measurement window.

In some example embodiments, the first capability information is determined responsive to a radio resource control configuration of the terminal device.

In some example embodiments, the first capability information is transmitted though radio resource control signaling as part of one or more of a UECapabilityInformation, UEAssistanceInformation or RRCReconfigurationComplete message.

In some example embodiments, the method further comprises: transmitting, to a network node, second capability information indicative of a capability of the terminal device to allow a hardware adjustment period preceding or following a measurement window to at least partially overlap with a processing period preceding or following a measurement gap window.

In some example embodiments, the second capability information is determined responsive to a radio resource control configuration of the terminal device.

In some example embodiments, the second capability information is transmitted though radio resource control signaling as part of one or more of a UECapabilityInformation, UEAssistanceInformation or RRCReconfigurationComplete message.

According to a fourth aspect, there is described a method comprising: providing, to a terminal device, first measurement configuration information scheduling a first measurement gap window for performing a first measurement, wherein a first processing period precedes the first measurement window and a second processing period follows the first measurement gap window; providing, to the terminal device, second measurement configuration information scheduling a second measurement window for performing a second measurement; receiving, from the terminal device, first capability information indicative of a capability of the terminal device to schedule a hardware adjustment period preceding or following a measurement window independently from the scheduling of the measurement window; and determining the second measurement configuration at least partly based on the first capability information.

In some example embodiments, the first capability information is indicative of a capability of the terminal device to schedule the hardware adjustment period to be disjointed from the measurement window.

In some example embodiments, the first capability information is received though radio resource control signaling as part of one or more of a UECapabilityInformation, UEAssistanceInformation or RRCReconfigurationComplete message.

In some example embodiments, the method further comprises: receiving, from the terminal device, second capability information indicative of a capability of the terminal device to allow a hardware adjustment period preceding or following a measurement window to at least partially overlap with a processing period preceding or following a measurement gap window; and means for determining the second measurement configuration at least partly based on the second capability information.

In some example embodiments, the second capability information is received though radio resource control signaling as part of one or more of a UECapabilityInformation, UEAssistanceInformation or RRCReconfigurationComplete message.

In some example embodiments, communication with the terminal device is disallowed during the first measurement gap window, the first hardware adjustment period and the second hardware adjustment period.

In some example embodiments, communication with the terminal device is allowed during the second measurement window.

According to a fifth aspect, there is provided a computer program product comprising a set of instructions which, when executed on an apparatus, is configured to cause the apparatus to carry out the method of: receiving first measurement configuration information scheduling a first measurement gap window for performing a first measurement, wherein a first processing period precedes the first measurement window and a second processing period follows the first measurement gap window; receiving second measurement configuration information scheduling a second measurement window for performing a second measurement; performing the first and second measurements based on the first and second measurement configuration information respectively; scheduling a first hardware adjustment period that precedes the second measurement window and a second hardware adjustment period that follows the second measurement window, wherein the first hardware adjustment period is scheduled to at least partially overlap with the first or second processing period, or the second hardware adjustment period is scheduled to at least partially overlap with the first or second processing period.

Optional features of the fifth aspect may comprise any features of the third aspect.

According to a sixth aspect, there is provided a non-transitory computer readable medium comprising program instructions stored thereon for performing a method, comprising: causing receiving first measurement configuration information scheduling a first measurement gap window for performing a first measurement, wherein a first processing period precedes the first measurement window and a second processing period follows the first measurement gap window; causing receiving second measurement configuration information scheduling a second measurement window for performing a second measurement; performing the first and second measurements based on the first and second measurement configuration information respectively; causing scheduling a first hardware adjustment period that precedes the second measurement window and a second hardware adjustment period that follows the second measurement window, wherein the first hardware adjustment period is scheduled to at least partially overlap with the first or second processing period, or the second hardware adjustment period is scheduled to at least partially overlap with the first or second processing period.

The program instructions of the sixth aspect may also perform operations according to any preceding method definition of the third aspect.

According to a seventh aspect, there is provided an apparatus comprising: at least one processor; and at least one memory including program code which, when executed by the at least one processor, cause the apparatus to: receive first measurement configuration information scheduling a first measurement gap window for performing a first measurement, wherein a first processing period precedes the first measurement window and a second processing period follows the first measurement gap window; receive second measurement configuration information scheduling a second measurement window for performing a second measurement; perform the first and second measurements based on the first and second measurement configuration information respectively; schedule a first hardware adjustment period that precedes the second measurement window and a second hardware adjustment period that follows the second measurement window, wherein the first hardware adjustment period is scheduled to at least partially overlap with the first or second processing period, or the second hardware adjustment period is scheduled to at least partially overlap with the first or second processing period.

The computer program code of the seventh aspect may also perform operations according to any preceding method definition of the third aspect.

According to an eighth aspect, there is provided a computer program product comprising a set of instructions which, when executed on an apparatus, is configured to cause the apparatus to carry out the method of: providing, to a terminal device, first measurement configuration information scheduling a first measurement gap window for performing a first measurement, wherein a first processing period precedes the first measurement window and a second processing period follows the first measurement gap window; providing, to the terminal device, second measurement configuration information scheduling a second measurement window for performing a second measurement; receiving, from the terminal device, first capability information indicative of a capability of the terminal device to schedule a hardware adjustment period preceding or following a measurement window independently from the scheduling of the measurement window; and determining the second measurement configuration at least partly based on the first capability information.

Optional features of the eighth aspect may comprise any features of the fourth aspect.

According to a ninth aspect, there is provided a non-transitory computer readable medium comprising program instructions stored thereon for performing a method, comprising: causing providing, to a terminal device, first measurement configuration information scheduling a first measurement gap window for performing a first measurement, wherein a first processing period precedes the first measurement window and a second processing period follows the first measurement gap window; causing providing, to the terminal device, second measurement configuration information scheduling a second measurement window for performing a second measurement; causing receiving, from the terminal device, first capability information indicative of a capability of the terminal device to schedule a hardware adjustment period preceding or following a measurement window independently from the scheduling of the measurement window; and causing determining the second measurement configuration at least partly based on the first capability information.

The program instructions of the ninth aspect may also perform operations according to any preceding method definition of the fourth aspect.

According to a tenth aspect, there is provided an apparatus comprising: at least one processor; and at least one memory including program code which, when executed by the at least one processor, cause the apparatus to: provide, to a terminal device, first measurement configuration information scheduling a first measurement gap window for performing a first measurement, wherein a first processing period precedes the first measurement window and a second processing period follows the first measurement gap window; provide, to the terminal device, second measurement configuration information scheduling a second measurement window for performing a second measurement; receive, from the terminal device, first capability information indicative of a capability of the terminal device to schedule a hardware adjustment period preceding or following a measurement window independently from the scheduling of the measurement window; and determine the second measurement configuration at least partly based on the first capability information.

The computer program code of the tenth aspect may also perform operations according to any preceding method definition of the fourth aspect.

### Brief Description of the Drawings

Example embodiments will now be described by way of non-limiting example, with reference to the accompanying drawings, in which:
Fig. 1 illustrates a measurement, according to one or more example embodiments;
Fig. 2 illustrates a measurement, according to one or more example embodiments;
Fig. 3 illustrates a message sequence, according to one or more example embodiments;
Fig. 4 illustrates a parallel measurement activity, according to one or more example embodiments;
Fig. 5 illustrates a terminal device, according to one or more example embodiments;
Fig. 6 shows a flow diagram, according to one or more example embodiments;
Fig. 7 illustrates examples of parallel measurement activities, according to one or more example embodiments;
Fig. 8 illustrates examples of parallel measurement activities, according to one or more example embodiments;
Fig. 9 illustrates a message sequence, according to one or more example embodiments;
Fig. 10 illustrates a network node, according to one or more example embodiments;
Fig. 11 shows a flow diagram, according to one or more example embodiments;
FIG. 12 shows an apparatus according to some example embodiments, which may comprise a terminal device or a network node;
FIG. 13 shows a non-transitory media, according to some embodiments.

### Detailed Description

Example embodiments describe an apparatus, method and computer program relating to configuration of a terminal device and network node for performing measurements in a mobile communications network, for example for measuring one or more neighbouring cells. Some example embodiments relate to the configuration of measurement windows for performing measurements.

In some example embodiments, a measurement window comprises a Measurement Gap (MG). In some example embodiments, a measurement gap comprises a pre-configured MG (pre-MG) which may be activated/deactivated by a defined trigger; for example, one or more of: Bandwidth Part (BWP) switching, Secondary Cell (SCell) activation/deactivation, or Radio Resource Control (RRC) reconfiguration. Further information regarding pre-configured MGs may be found at clause 8.19 and 9.1.7 in TS 38.133.

In some example embodiments, a measurement gap comprises a concurrent MG configured with an association. For example, an association may include one or more of Radio Resource Management (RRM), Positioning Reference Signal (PRS) Measurements or a priority. For example, a priority may be for resolving collisions (i.e. overlapping in the time domain) with another concurrent gap. For example, a MG with a lower priority may be dropped if it overlaps with another MG in time. Further information regarding concurrent MGs may be found in clause 9.1.8 in TS 38.133.

In some example embodiments, measurement windows comprise a network controlled small gap (NCSG). In some example embodiments, an NCSG may comprise configuring a vacant receiver chain of the terminal device for measuring signals from neighbouring cells during a measurement window (ML). An NCSG may comprise one or more interruption periods. An interruption period may be a period in which the terminal device is interrupted from scheduling data on an uplink or downlink on the serving carrier. In some example embodiments, an NCSG interruption period may comprise tuning the vacant receiver chain to a target carrier. In some example embodiments, no interruption periods occur during the ML. Further information regarding NCSGs may be found in clause 9.1.9 in TS 38.133.

In some example embodiments, measurement gaps (such as pre-MG or concurrent MG) are performed when a network node (such as a base station, eNodeB or gNodeB) configures a measurement gap pattern (MGP) for the terminal device to perform measurements on a serving (intra-frequency measurements) or non-serving carrier (inter-frequency measurements).

In some example embodiments, measurement gaps may be configured by a network node based on an indication, from the terminal device, for a need for measurement gaps. A measurement gaps may be defined as a time window configured by the network node in which the terminal device is not expected to receive from nor transmit to the serving network node. For example, a terminal device may not be expected to receive or transmit one or more of the following signals to the serving network node: Physical Downlink Control Channel (PDCCH) signals, Physical Downlink Shared Channel (PDSCH) signals, Physical Uplink Control Channel (PUCCH) signals, Physical Uplink Shared Channel (PUSCH) signals, reference signals such as Positioning Reference Signals (PRS), and Sounding Reference Signals (SRS).

In some example embodiments, a measurement gap may be configured by Radio Resource Control (RRC). A configuration of a measurement gap or MGP may include one or more of a measurement gap repetition period, a measurement gap length, a measurement gap offset, or a measurement gap timing advance.

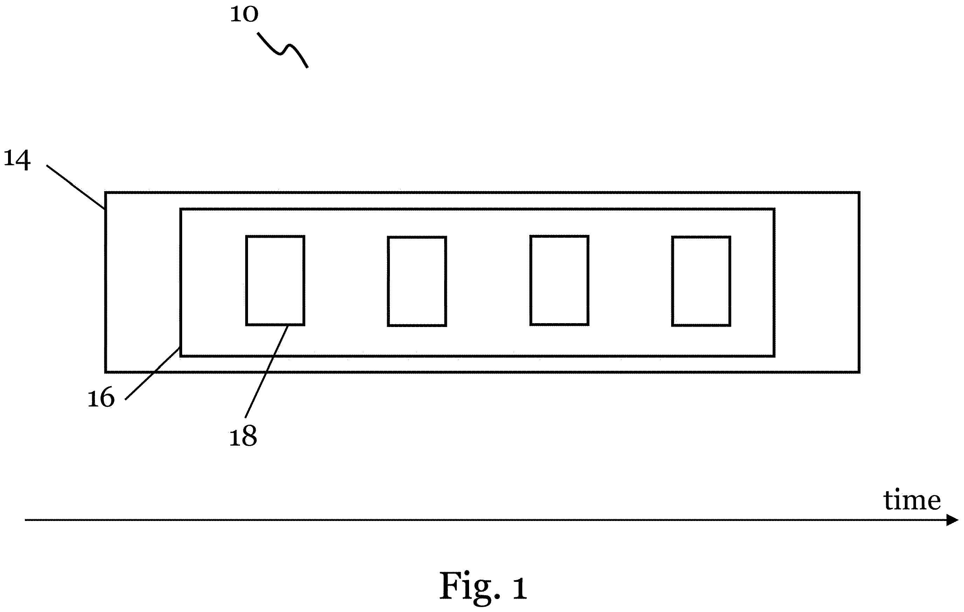

Fig. 1 illustrates a measurement, indicated generally by reference numeral 10, according to one or more example embodiments.

In some example embodiments, the measurement 10 is performed by a terminal device (not shown) on one or more carriers of a network. The measurement 10 comprises a measurement gap 14. The measurement gap 14 may be a legacy measurement gap. The measurement gap 14 may have a length (i.e. a duration or period in time). In some example embodiments, the measurement gap length may be at least 1.5ms. In some example embodiments, the measurement gap length may be less than or equal to 20ms.

The measurement gap 14 may also comprise a gap repetition period (not shown). In some example embodiments, the gap repetition period may be at least 20ms. In some example embodiments, the gap repetition period may be less than or equal to 160ms.

The measurement 10 may also comprise an SSB-based Measurement Timing Configuration (SMTC) window 16. In some example embodiments, the SMTC window 16 may comprise one or more SSBs 18, each SSB comprising a Primary Synchronization Signal (PSS), a Secondary Synchronization Signal (SSS), and Physical Broadcast Channel (PBCH) signals conveying a Master Information Block (MIB).

In some example embodiments, the terminal device performs an L3 measurement of an SSB during the measurement gap 14. In some example embodiments, the measurement gap 14 length may be greater than the SMTC window 16.

For example, a typical SSB-burst length may be about 5ms with a repetition period of about 20ms. In some example embodiments, the network node may configure the measurement gap length and repetition period to cover an integer number of occurrences of the SSB-burst. For example, the network node may configure the measurement gap length, offset and repetition period to match the fourth successive occurrence of an SSB-burst. For example, a network node may configure a measurement gap length of about 5.5ms and a gap repetition period of about 80ms.

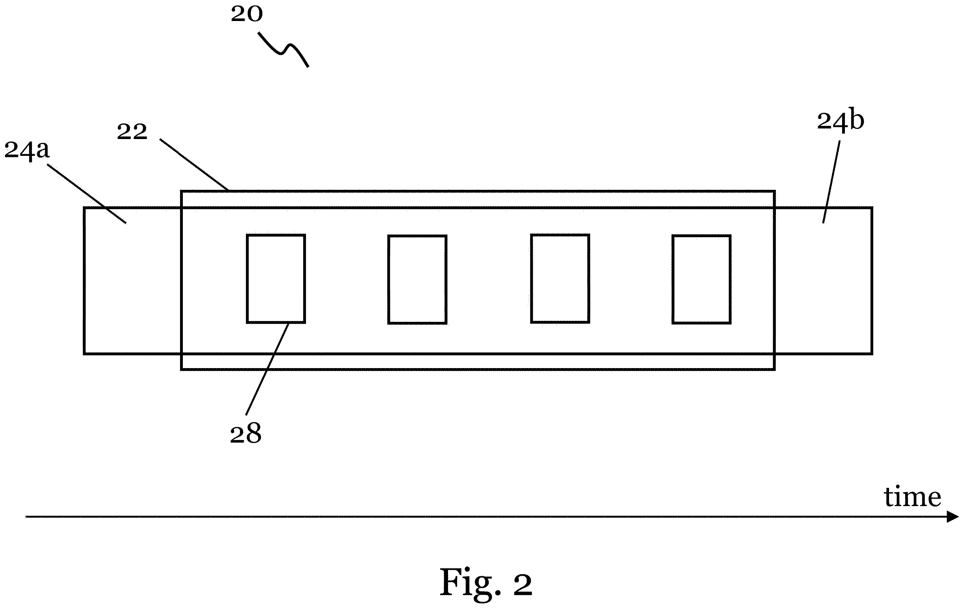

Fig. 2 illustrates a measurement, indicated generally by reference numeral 20, according to one or more example embodiments.

In some example embodiments, the measurement 20 is performed by a terminal device (not shown) on one or more carriers. The measurement 20 may comprise a measurement window 22. The measurement window 22 may be an NCSG or gapless measurement. The measurement 20 may further comprise a first interruption period 24a before the measurement window 22. The measurement 20 may further comprise a second interruption period 24b after the measurement window 22. The first and second interruption periods 24a, 24b may be referred to as hardware adjustment periods. A hardware adjustment period is a period used by the terminal device to tune one or more vacant receiver chains of the terminal device. In some example embodiments, the first and/or second interruption periods 24a, 24b comprise a scheduling restriction in which a terminal device may not be scheduled to receive downlink data or transmit uplink data during the first and/or second interruption periods 24a, 24b.

In some example embodiments, measurement 20 may correspond to a network controlled small gaps (NCSG). In some example embodiments, the first and/or second interruption periods 24a, 24b may correspond to a first and/or second Visible Interruption Length (VIL1, VIL2) of NCSG. A VIL may be dependent on the frequency of the carrier. For example, a VIL maybe about 1 ms for FR1 and about 0.75 ms for FR2.

A terminal device may perform measurements with NCSG. In some example embodiments, a terminal device may comprise a vacant (i.e. spare or available) receiver chain (e.g. comprising an RF analog part and a digital baseband part). A vacant receiver chain may be used for measurements on given target carrier(s). A terminal device may use a vacant receiver chain for performing NCSG. A terminal device may use a vacant receiver chain for performing measurement 20.

In some example embodiments, the measurement window 22 covers an SMTC window, which comprise one or more SSBs 28. In some example embodiments, a terminal device may be scheduled in the serving cell to receive downlink data or transmit uplink data during the measurement window 22.

The existing signaling associated with those 3 types of gaps includes RRC configuration and response messages.

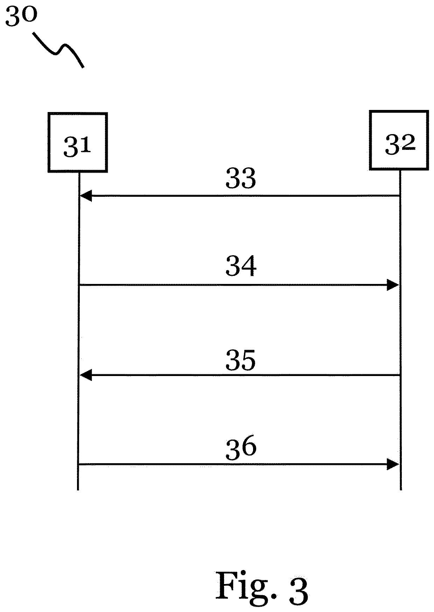

Fig. 3 illustrates a message sequence, indicated generally by reference numeral 30, according to one or more example embodiments.

In some example embodiments, the message sequence 30 depicts a message sequence between a terminal device 31 and a network node 32. In some example embodiments, the message sequence 30 may be used for a measurement (such as measurement 10 or 20 described above in relation to Figs 1 or 2). In some example embodiments, the message sequence 30 may be used for signaling of measurement gaps/NCSG support; for example, as described under Rel-17 of the 3^{rd} Generation Partnership Project (3GPP).

The network node 32 sends a first message 33 to the terminal device 31. The first message 33 may be an *RRCReconfiguration* message for configuring a *needForGaps* process; for example, as described in Rel-16 for New Radio (NR). The *RRCReconfiguration* message includes the Information Element (IE) *needForGapsConfigNR,* which includes the NR bands for which the terminal device 31 is requested to report the gap information.

The terminal device 31 may respond to the first message 33 with a second message 34. The second message 34 may be an *RRCReconfigurationComplete* message which may include one or more of: a *needForGapsInfoNR* IE, a list of Intra-Frequency cells (e.g. for which a measurement gap may be required), a *gapIndication-r16* IE (i.e. to indicate whether "gap" or "no-gap" is required), a list of inter-frequency bands (e.g. for which a measurement gap may be required).

In some example embodiments, the second message 34 may comprise a *needForGaps* IE (Rel-16) or *needForNCSG* IE (Rel-17). A *needForNCSG* IE may be used by the terminal device 31 to indicate the need of NSCG gaps. The terminal device 31 may further include additional information as part of the *needForNCSG* IE indicating one or more of a "gap", "ncsg", "nogap-noncsg".

The network node 32 may send a third message 35 to the terminal device 31. The third message may be an *RRCReconfiguration* message for configuring gaps for the terminal device 31; for example using a *GapConfig* IE which may comprise *preConfiglnd-r17* and *nscglnd-r17.*

The terminal device 31 may respond with a fourth message 36 to the network node 32. The fourth message 36 may be an *RRCReconfigurationComplete* message.

Further information regarding the relevant ASN.1 parameters related to the above IEs and messages 33, 34, 35, 36 are described below [TS 38.331].

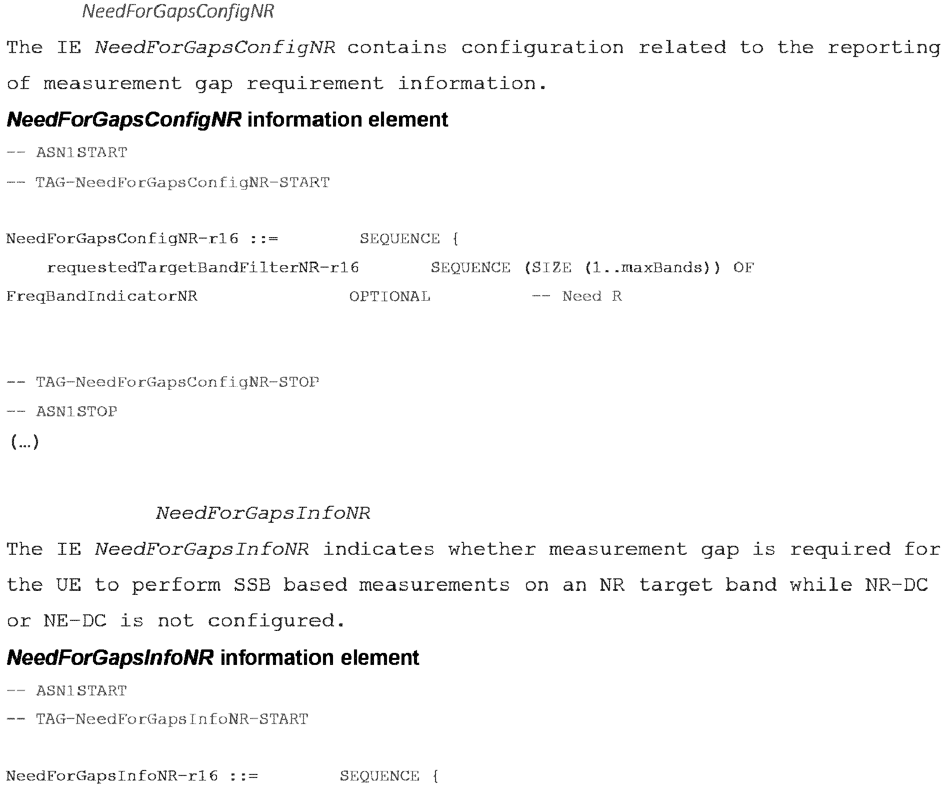

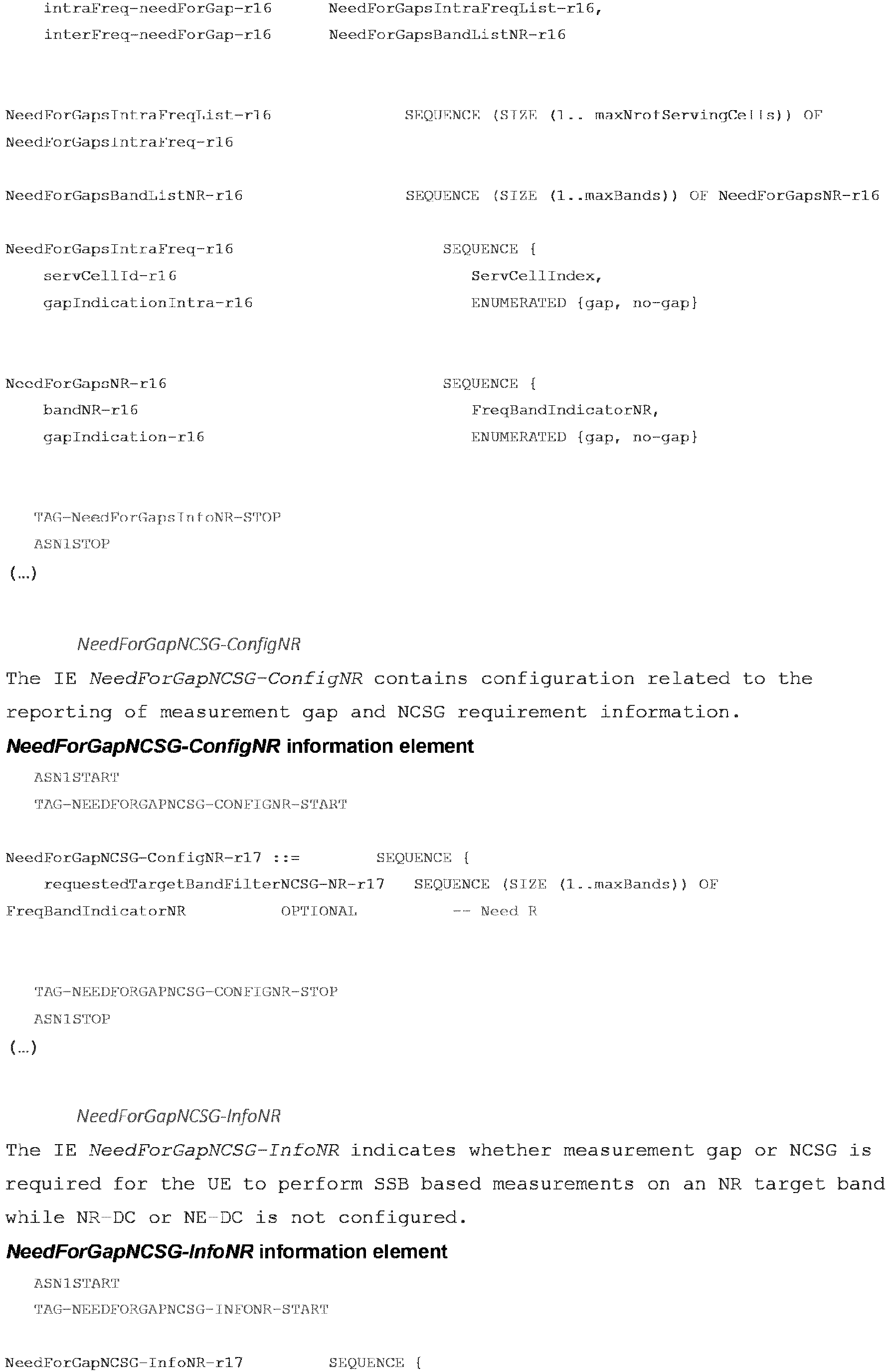

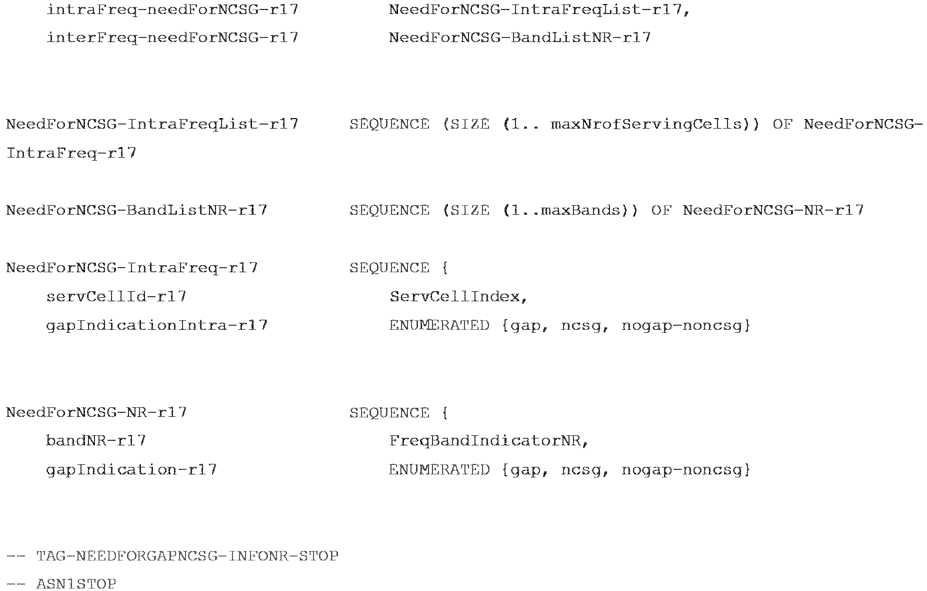

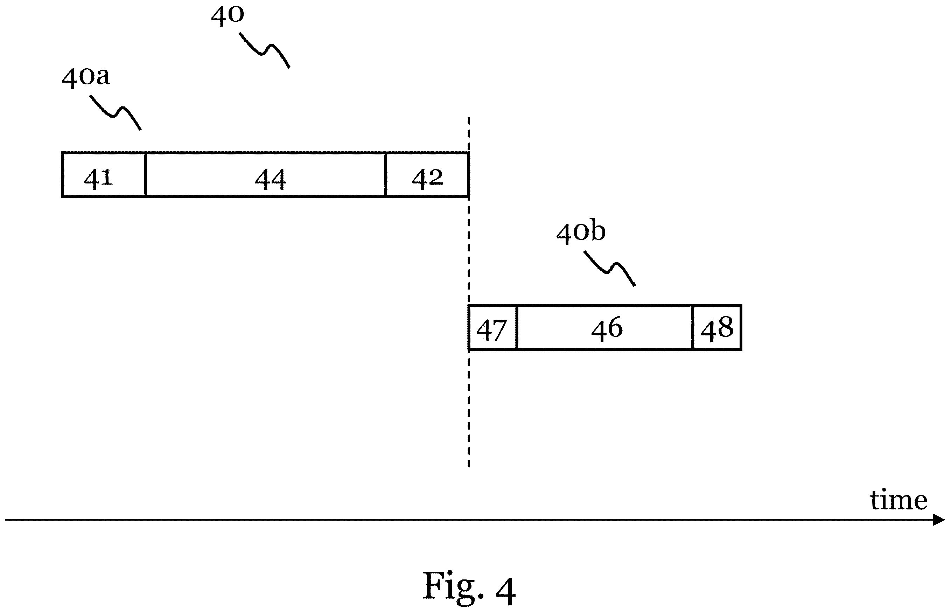

Fig. 4 illustrates a parallel measurement activity, indicated generally by reference numeral 40, according to one or more example embodiments.

Parallel measurement activity 40 may be scheduled by a network node (not shown). Parallel measurement activity 40 may be performed by a terminal device (not shown); for example on one or more carriers or signals of a network node. Parallel measurement activity 40 may comprise a first measurement 40a and a second measurement 40b performed in parallel (at different times). The first measurement 40a may be the same or similar to measurement 10 shown in Fig. 1. The second measurement 40b may be the same or similar to measurement 20 shown in Fig. 2.

The first measurement 40a may comprise a first measurement gap window 44; which may be the same or similar to measurement gap 14 described above in relation to Fig. 1. A terminal device may use the first measurement gap window 44 to perform a measurement (for example, on a first carrier). The first measurement gap window 44 may be preceded (in time) by a first processing period 41 (or pre-processing period or first proximity period/interval or first guard period/interval) and followed (in time) by a second processing period 42 (or post-processing period or second proximity period/interval or second guard period/interval). The first processing period 41, first measurement gap window 44 and second processing period 42 are shown to be in sequence in time and adjacent in time (i.e. there is substantially no interruptions or time delay/interval between adjacent periods). The first measurement gap window 44 may be performed by a terminal device on a first receiver chain of the terminal device. During the first measurement gap window 44, uplink and downlink scheduling from the network may be restricted.

The second measurement 40b may comprise a second measurement window 46; which may be the same or similar to the measurement window 22 described above in relation to Fig. 2. For example, the second measurement 40b may be a NCSG measurement using a second (vacant) receiver chain of the terminal device. A terminal device may use the second measurement window 46 to perform a measurement (for example, on a second carrier). The terminal device may schedule a first hardware adjustment period 47 preceding (i.e. earlier in time) the second measurement window 46. The first hardware adjustment period 47 may be used by the terminal device to tune a second receiver chain of the terminal device to the second carrier (e.g. to the carrier frequency of the second carrier). The terminal device may also schedule a second hardware adjustment period 48 following (i.e. later in time) the second measurement window 46. The second hardware adjustment period 48 may be used by the terminal device to tune the second receiver chain of the terminal device to a different carrier, e.g. an active carrier. For example, the first and/or second hardware adjustment periods 47, 48 may correspond to VIL1 and/or VIL2 in NCSG.

In some example embodiments, measurements 40a and 40b may be scheduled to avoid colliding in time. For example, the measurements 40a and 40b may be scheduled such that they do not overlap in time. Measurements 40a and 40b are shown in Fig. 4 in sequence without any overlap.

According to TS38.133 (section 9.1.8), when a terminal device is configured with concurrent measurement gaps, two measurement gap occasions may be considered colliding if at least one of the following conditions is met: the two measurement occasions are fully or partially overlapping in time domain, or the distance between the two measurement occasions is equal to or smaller than 4ms. Thus, the measurements 40 illustrate a permitted sequence because the second measurement 40b occurs after the end of the second processing period 42 of the first measurement 40a.

In some example embodiments, the terminal device may follow a procedure for coordinating the first and/or second hardware adjustment periods 47, 48. For example, a procedure may comprise one or more of the following steps:
The terminal device may initially determine whether it has a vacant receiver chain which may be used to perform a given measurement.

Step 1 - the terminal device may calculate the start time of the measurement window 46 *Tstart.*

Step 2 - *Tdelay* ms before the start of the measurement window 46, the terminal device may activate the vacant receiver chain. For example, this may correspond to the first hardware adjustment period 47 (which may be an NCSG VIL1).

Step 3 - The terminal device may retune the vacant receiver chain to the frequency where the measurement will be performed. During this step an interruption may occur on the active RF chains (i.e. on serving component carriers).

Step 4 - The terminal device may perform the measurement on the given frequency i.e. during the second measurement window 46.

Step 5 - The terminal device may deactivate the vacant receiver chain. During this step, an interruption may occur on the active RF chains (i.e. on serving component carriers).

In some example embodiments, the time for *Tdelay* may depend on the average time for activation/deactivation and/or tuning/retuning of the vacant receiver chain as well as for some uncertainty associated with that time. Note, for NSCG VIL1 = VIL2 = 1ms is defined in TS 38.133 for FR1 and VIL1 = VIL2 = 0.75 ms for FR2.

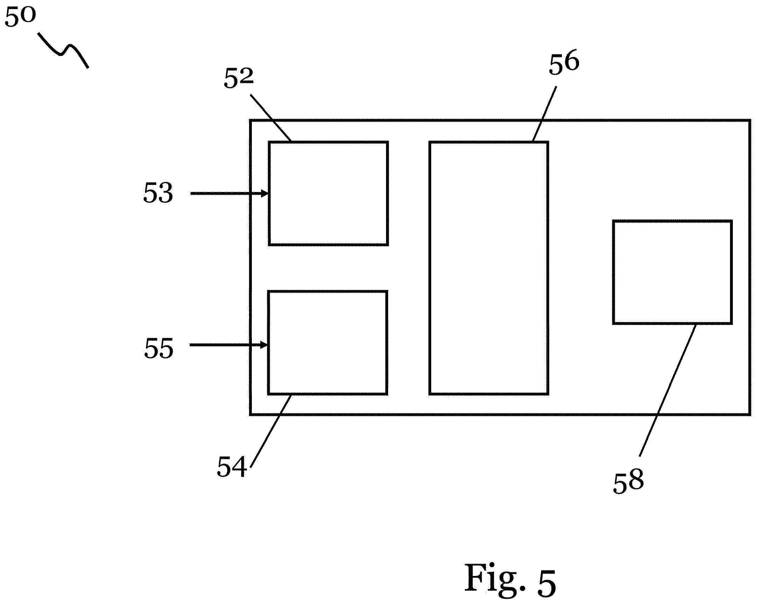

Fig. 5 illustrates a terminal device, indicated generally by reference numeral 50, according to one or more example embodiments.

The terminal device 50 may be (or be part of) a User Equipment (UE) such as a smartphone etc. The terminal device 50 may be configurable by a network node (not shown). The terminal device 50 may be configurable to perform a measurement on a carrier. The terminal device 50 may therefore comprise a means for receiving 52 (for example from a network node) first measurement configuration information 53. The first measurement configuration information 53 may comprise scheduling of a measurement (for the terminal device 50). The measurement may comprise a first measurement gap window for performing a first measurement. For example, the measurement may be the same or similar to measurement 10; described above in relation to Fig. 1; i.e. the first measurement gap window may correspond to measurement gap 14. In some example embodiments, the terminal device 50 may have schedule restrictions during the first measurement gap window. In some example embodiments, the terminal device 50 performs the first measurement gap window using a first receiver chain of the terminal device 50.

A first processing period may precede the first measurement gap window. In some example embodiments, the end time of the first processing period may be adjacent to the start time of the first measurement gap window i.e. there is substantially no delay between the end of the first processing period and the initiation of the first measurement gap window.

A second processing period may follow the first measurement gap window. In some example embodiments, the end time of the first measurement gap window may be adjacent to the start time of the second processing period i.e. there is substantially no delay between the end of the first measurement gap window and the start of the second processing period.

In some example embodiments, the first processing period, the first measurement gap window and the second processing period are performed in sequence. In some example embodiments, the first processing period, the first measurement gap window and the second processing period are contiguous (in time).

In some example embodiments, the first measurement gap window is surrounded (in time) by a first processing period preceding the first measurement gap window and by a second processing period following the first measurement gap window.

In some example embodiments, each of the first and/or second processing period comprise one or more of a guard period or guard interval or proximity period or proximity interval. In some example embodiments, the first processing period comprises a pre-guard interval/period. In some example embodiments, the second processing period comprises a post-guard interval/period. In some example embodiments, a pre-guard interval/period and a post-guard interval/period contiguously/immediately precede and follow the first measurement gap window respectively.

The terminal device 50 may further comprise a means for receiving 54 second measurement configuration information 55 (for example from a network node). The second measurement configuration information 55 may comprise scheduling of a measurement (for the terminal device 50). The measurement may comprise a second measurement window for performing a second measurement. For example, the measurement may be the same or similar to measurement 20; described above in relation to Fig. 2 i.e. the second measurement window may correspond to measurement window 22. In some example embodiments, the terminal device 50 may not have schedule restrictions during the second measurement window. In some example embodiments, the terminal device 50 performs the second measurement window on a second receiver chain of the terminal device 50. In some example embodiments, the second receiver chain is a vacant receiver chain of the terminal device 50.

The terminal device 50 may further comprise means for performing measurements 56 based on the first and second measurement configuration information respectively.

The terminal device 50 may further comprise means for scheduling 58 a first hardware adjustment period that precedes the second measurement window. In some example embodiments, the first hardware adjustment period is scheduled to at least partially overlap with the first or second processing period of the first measurement gap window.

The means for scheduling 58 may further schedule a second hardware adjustment period that follows the second measurement window. In some example embodiments, the second hardware adjustment period is scheduled to at least partially overlap with the first or second processing period of the first measurement gap window.

In some example embodiments, the first and/or second hardware adjustment period comprise interruption periods that may be the same or similar to interruption periods 24a, 24b described above in relation to Fig. 2. For example, the first and/or second hardware adjustment periods may be used by the terminal device 50 to tune/retune one or more vacant receiver chains of the terminal device 50. In some example embodiments, the first and/or second hardware adjustment periods may correspond to VIL1 and/or VIL2 of NCSG.

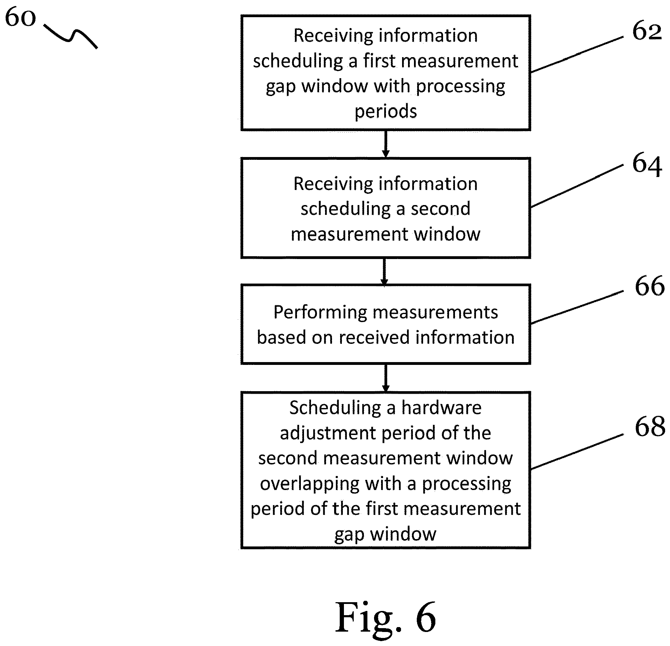

Fig. 6 shows a flow diagram, indicated generally by reference numeral 60, according to one or more example embodiments. The flow diagram 60 may indicate the operations performed by a terminal device (such as terminal device 50 described above in relation to Fig. 5). The operations may be performed by hardware, software, firmware or a combination thereof.

A first operation 62 may comprise receiving first measurement configuration information scheduling a first measurement gap window for performing a first measurement, wherein a first processing period precedes the first measurement gap window and a second processing period follows the first measurement gap window.

A second operation 64 may comprise receiving second measurement configuration information scheduling a second measurement window for performing a second measurement.

A third operation 66 may comprise performing the first and second measurements based on the first and second measurement configuration information respectively.

A fourth operation 68 may comprise scheduling a first hardware adjustment period that precedes the second measurement window and a second hardware adjustment period that follows the second measurement window. The first hardware adjustment period may be scheduled to at least partially overlap with the first or second processing period. The second hardware adjustment period may be scheduled to at least partially overlap with the first or second processing period.

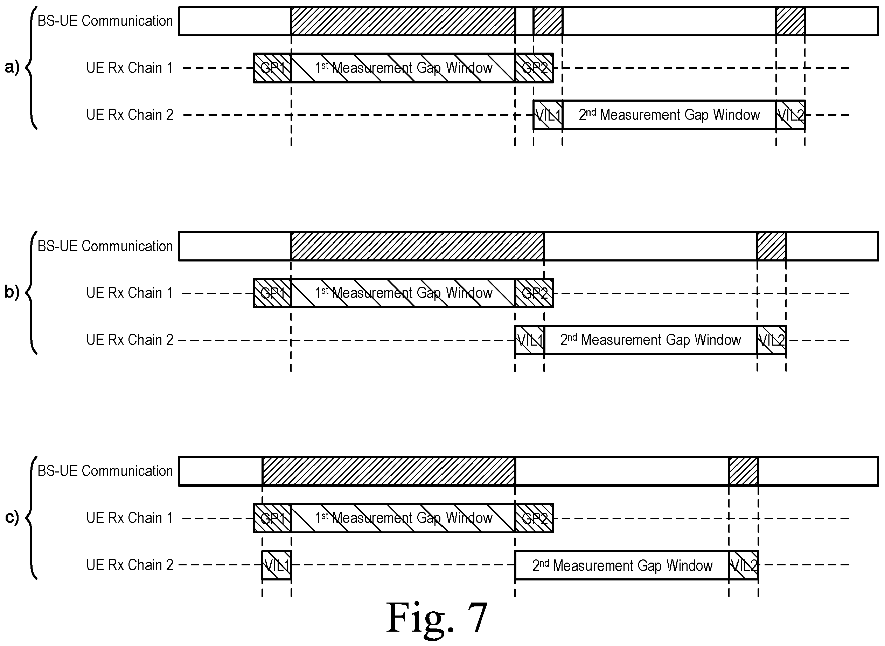

Fig. 7 illustrates examples of parallel measurement activities, indicated generally by reference numeral 70, according to one or more example embodiments.

Parallel measurement activities 70 shows 3 examples of parallel measurements; labelled a), b) and c) according to one or more example embodiments. In these examples 70, the first measurement gap window is scheduled before the second measurement window. Each example (Fig. 7a, Fig. 7b, Fig. 7c) comprise a top axis, middle axis and lower axis illustrating a timeline of three processes. The top axis (labelled BS-UE Communication) corresponds to scheduled restrictions where shaded intervals correspond to schedule restrictions (for example, where uplinks or downlinks cannot be scheduled) and clear intervals correspond to active intervals (i.e. no restrictions). The middle axis corresponds to a first receiver chain of a UE/terminal device and the bottom axis corresponds to a second receiver chain of the UE/terminal device. Generally, schedule restrictions occur during one or more of the first measurement gap window, VIL1 or VIL2.

The first receiver chain may be configured to perform measurement gaps (such as 10 described above in relation to Fig. 1). For example, the measurement may comprise a first processing interval (i.e. Guard Period 1 (GP1)), a first measurement gap window and a second processing interval (i.e. GP2) in sequence. In some example embodiments, GP1 is adjoined to the start of the first measurement gap window and GP2 is adjoined to the end of the first measurement gap window. In other words, GP1, the first measurement gap window and GP2 are performed contiguously in sequence i.e. without any substantial delay or interval between them.

The second receiver chain may be configured to perform NCSG (such as 20 described above in relation to Fig. 2). For example, the measurement may comprise a first hardware adjustment period (such as a VIL1), a second measurement window and a second hardware adjustment period (such as a VIL2).

The parallel measurement activities 70 may be examples of parallel measurements that may at least partially overlap (in time) without interfering with each other. This may allow reduction in time between the first measurement gap window and second measurement window when performed sequentially. Embodiments may be limited by one or more of the following limitations:
1. VIL1 and/or VIL2 of the second receiver chain may not overlap with the first measurement gap of the first receiver chain.
2. A VIL1 and/or VIL2 on one receiver chain may not overlap with a VIL on any other receiver chain in the same terminal device.
3. The first measurement gap window may not overlap with the second measurement window. This is because the first measurement gap window may comprise tuning/retuning periods at unknown times within the first measurement gap window.
4. VIL1, VIL 2 and/or the second measurement window may overlap with any one of GP1 or GP2.

In a first example Fig.7a, VIL1, the second measurement window and VIL2 are performed contiguously in sequence. VIL1 at least partially overlaps GP2 such that these processes at performed, at least partially, in parallel (i.e. at the same time). The second measurement window does not overlap with GP2. There is a first delay between the end of the first measurement gap window and the start of VIL1. The first delay may be less than (the duration of) GP2.

In a second example Fig.7b, VIL1, the second measurement window and VIL2 are performed contiguously in sequence. VIL1 is fully overlapped with GP2 and the second measurement window is partially overlapped with GP2. There is substantially no delay between the end of the first measurement gap window and the start of VIL1. The delay between the end of the first measurement gap window and the start of the second measurement window is substantially equal to the length of VIL1.

In a third example Fig.7c, VIL1, the second measurement window and VIL2 are performed in sequence; however, VIL1 is non-contiguous with the second measurement window i.e. there is a second delay between the end of VIL1 and the start of the second measurement window. In other words, VIL1 (i.e. a first hardware adjustment period) is scheduled to be disjointed from the second measurement window. The second delay may be the length of the first measurement gap window i.e. VIL1 is performed before the first measurement gap window (i.e. precedes it in time) and the second measurement window and VIL2 are performed after the first measurement gap window. In some example embodiments, VIL1 at least partially overlaps with GP1. In some example embodiments, VIL1 fully overlaps with GP1. In some example embodiments, VIL1 is contiguous with the first measurement gap window i.e. there is substantially no delay between the end of VIL1 and the start of the first measurement gap window, i.e. VILL is adjacent to the first measurement gap window (as shown in Fig. 7c). In some example embodiments, VIL1 is non-contiguous with the first measurement gap window i.e. there is a delay between the end of VIL1 and the start of the first measurement gap window i.e. VIL1 is not adjacent to the first measurement gap window. In some example embodiments, the second measurement window at least partially overlaps with GP2. In some example embodiments, the first measurement gap window is contiguous with the second measurement window i.e. there is substantially no delay between the end of the first measurement gap window and the start of the second measurement window (as shown in Fig. 7c). In some example embodiments, the second measurement window is contiguous with VIL2.

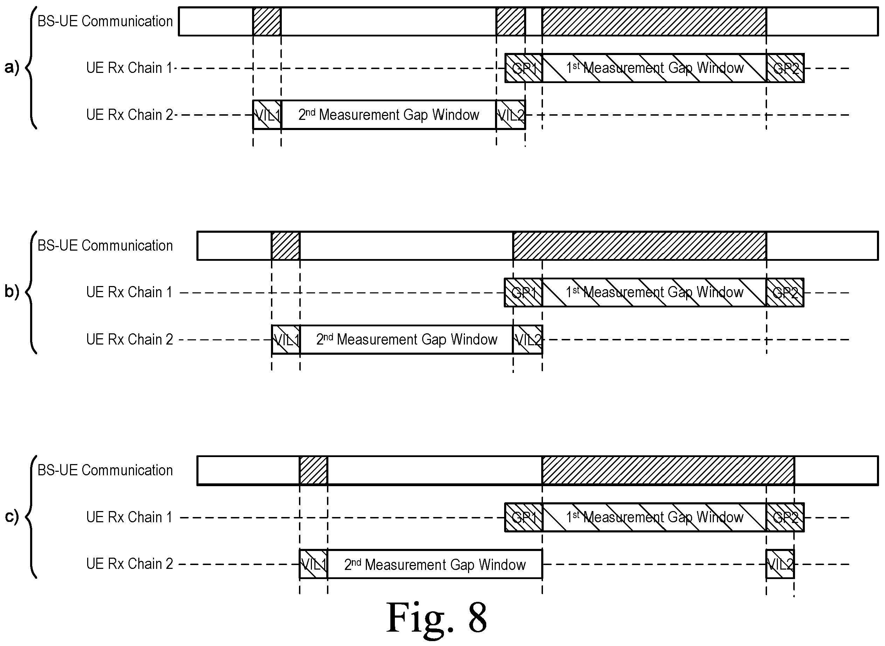

Fig. 8 illustrates examples of parallel measurement activities, indicated generally by reference numeral 80, according to one or more example embodiments.

Parallel measurement activities 80 shows 3 examples of parallel measurements; labelled a), b) and c) according to one or more example embodiments. The examples Fig. 8a, Fig. 8b and Fig. 8c may be similar to examples 70 described above in relation to Fig. 7. However, in examples 80, the second measurement window is scheduled before the first measurement gap window.

In a fifth example Fig. 8a, VIL1, the second measurement window and VIL2 are performed contiguously in sequence. VIL2 at least partially overlaps GP1 such that these processes at performed, at least partially, in parallel (i.e. at the same time). The second measurement window does not overlap with GP1. There is a third delay between the end of VIL2 and the start of the first measurement gap window. The third delay may be less than (the duration of) GP1.

In a sixth example Fig.8b, VIL1, the second measurement window and VIL2 are performed contiguously in sequence. VIL2 is fully overlapped with GP1 and the second measurement window is partially overlapped with GP1. There is substantially no delay between the end of VIL2 and the start of the first measurement gap window. The delay between the end of the second measurement window and the start of the first measurement gap window is substantially equal to the length of VIL2.

In a seventh example Fig. 8c, VIL1, the second measurement window and VIL2 are performed in sequence; however, the second measurement window is non-contiguous with VIL2 i.e. there is a fourth delay between the end of the second measurement window and the start of VIL2. In other words, VIL2 (i.e. a second hardware adjustment period) is scheduled to be disjointed from the second measurement window. The fourth delay may be the length of the first measurement gap window i.e. VIL2 is performed after the first measurement gap window (i.e. follows it in time) whereas VIL1 and the second measurement window are performed before the first measurement gap window. In some example embodiments, VIL2 at least partially overlaps with GP2. In some example embodiments, VIL2 fully overlaps with GP2. In some example embodiments, VIL2 is contiguous with the first measurement gap window i.e. there is substantially no delay between the start of VIL2 and the end of the first measurement gap window i.e. the first measurement gap window is adjacent to VIL 2(as shown in Fig. 8c). In some example embodiments, VIL2 is non-contiguous with the first measurement gap window i.e. there is a delay between the end of the first measurement gap window and the start of VIL2 i.e. the first measurements gap window is not adjacent to VIL2. In some example embodiments, the second measurement window at least partially overlaps with GP1. In some example embodiments, the second measurement window is contiguous with the first measurement gap window i.e. there is substantially no delay between the end of the second measurement window and the start of the first measurement gap window (as shown in Fig. 8c). In some example embodiments, VIL1 is contiguous with the second measurement window.

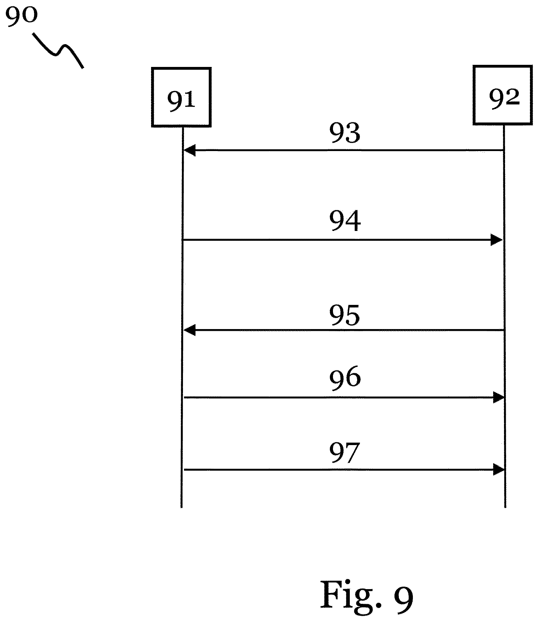

Fig. 9 illustrates a message sequence, indicated generally by reference numeral 90, according to one or more example embodiments.

In some example embodiments, message sequence 90 may be used for signaling between a terminal device 91 and a network node 92 to coordinate overlapping measurements; for example, when (legacy) measurement gaps on an active receiver chain overlap with NCSG measurements on a vacant receiver chain.

In some example embodiments, the terminal device 91 may provide, to the network node 92, first capability information indicative of a capability of the terminal device 91 to schedule a hardware adjustment period preceding or following a measurement window independently from the scheduling of the measurement window. For example, the first capability information may be indicative of a capability of the terminal device 91 to schedule the first and/or second hardware adjustment period independently from the scheduling of the second measurement window.

In some example embodiments, the first capability information is determined responsive to a radio resource control (RRC) configuration of the terminal device. The RRC configuration may entail modifying/adjusting a carrier-aggregation configuration/status or a dual-connectivity configuration/status of the terminal device 91, which ultimately dictates whether a vacant receiver chain of the terminal device 91 is available for performing additional measurements. In some example embodiments, the first capability information is transmitted though radio resource control signaling as part of one or more of a *UECapabilityInformation, UEAssistanceInformation* or *RRCReconfigurationComplete* message.

In some example embodiments, the first capability information may be indicative of a capability of the terminal device 91 to schedule the hardware adjustment period to be disjointed from the measurement window. For example, the first capability information may be indicative of a capability of the terminal device 91 to schedule the first and/or second hardware adjustment period to be disjointed from the second measurement window.

In some example embodiments, the terminal device 91 may provide, to the network node 92, second capability information indicative of a capability of the terminal device to allow a hardware adjustment period to at least partially overlap with a processing period preceding or following a measurement gap window.

In some example embodiments, the second capability information is determined responsive to a radio resource control (RRC) configuration of the terminal device. The RRC configuration may entail modifying/adjusting a carrier-aggregation configuration/status or a dual-connectivity configuration/status of the terminal device 91. In some example embodiments, the second capability information is transmitted though radio resource control signaling as part of a UECapabilityInformation or UEAssistanceInformation or RRCReconfigurationComplete message.

For example, the terminal device 91 may indicate an ability to handle parallel (legacy) measurement gaps and NCSG/gapless measurements.

In a first message 93, the network node 92 may send a *UECapabilityEnquiry* message to the terminal device 91.

A second message 94 may comprise a *UECapabilityInformation* message. The second message 94 may comprise an indication of the ability of the terminal device 91 to handle parallel (legacy) measurement gaps and NCSG/gapless measurements. Whenever a configuration is given to the terminal device 91, the terminal device 91 may establish the need for potential interruptions due to the measurements.

In some example embodiments, the network node 92 may request performance parameters (from the terminal device 91) for measurement gaps overlapping with NCSG/gapless measurements.

In a third message 95, the network node 92 may send a *RRCReconfiguration* message which may comprise a *needForGapsNCSG* IE or similar to the terminal device 91.

The terminal device 91 may then evaluate the configuration and establish whether it is capable of handling overlap of specific parts of the measurement procedure.

In a fourth message 96, the terminal device 91 may send a *UEAssistanceInformation* message to the network node 92. The fourth message 96 may comprise information regarding the ability (of the terminal device 91) to handle parallel activities, for example, VIL in parallel to a guard period, measurement window in parallel to guard periods, coordination of dynamic placement of VIL, etc.

In a fifth message 97, the terminal device 91 may send a *RRCReconfigurationComplete* message to the network node 92. The fifth message 97 may comprise a *needForGapNCSGInfo* IE. The fifth message 97 may comprise information regarding the ability (of the terminal device 91) to handle parallel activities, for example, VIL in parallel to a guard period, measurement window in parallel to guard periods, coordination of dynamic placement of VIL, etc.

In some example embodiments, there may be multiple options to support the terminal device 91 capability reporting to the network node 92, for example:
1. the terminal device 91 may report capabilities in respect to the parallel measurement activities; such as the examples shown in Figs. 7 and 8;
2. hardware adjustment periods (e.g. VILs) overlapping with processing periods (e.g guard periods);
3. minimum length of a processing period (e.g. guard period);
4. measurements windows (on alternate RX chains) in parallel to processing periods (e.g. guard periods);
5. coordination of dynamic placement of hardware adjustment periods (e.g. VILs);
6. if any of the capabilities are use case dependent, the terminal device 91 may adjust support and parameters as listed above based on which use case/configuration that is given. This allows maximum flexibility on network side scheduling measurements. In this step, it is suggested to use a terminal device 91 assistance information message or as the response to the RRC configuration message;
7. an alternative to the terminal device assistance information message may be using a RRC configuration complete message.

It should be noted that there are considerations in adding UE capability information in the UE assistance information in 3GPP RAN2 context. If this happens, then the 3 methods above converge towards same or a combination thereof.

Generally, a network node 92 knows the number of RF chains through the reporting of the Carrier Aggregation (CA) capabilities. In some example embodiments, the terminal device 91 may have use cases where an RF chain is available for measurements, but not for CA if limits for data throughput is reached, or similar.

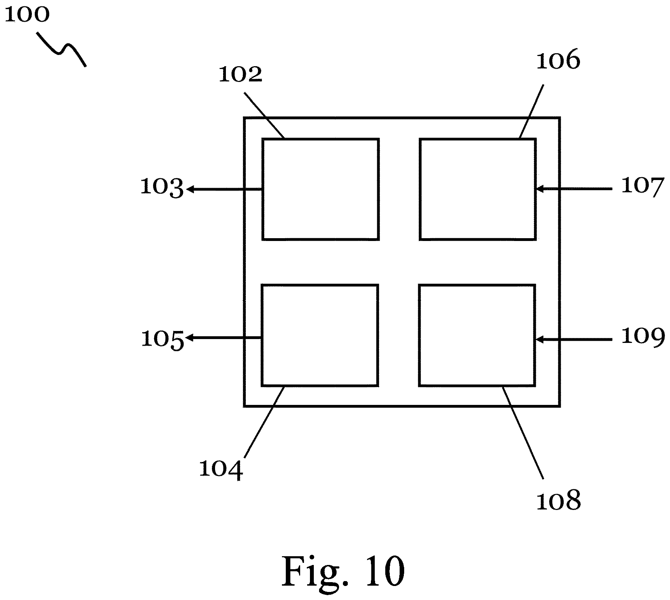

Fig. 10 illustrates a network node, indicated generally by reference numeral 100, according to one or more example embodiments.

The network node 100 may comprise a means for providing 102, to a terminal device (not shown), first measurement configuration information 103. The first measurement configuration 103 may comprise scheduling a first measurement gap window for the terminal device to perform a first measurement. For example, the first measurement may be the same or similar to measurement 10; described above in relation to Fig. 1; i.e. the first measurement gap window may correspond to measurement gap 14. In some example embodiments, the network node 100 may have scheduling restrictions during the first measurement gap window.

A first processing period may precede the first measurement gap window. In some example embodiments, the end time of the first processing period may be adjacent to the start time of the first measurement gap window i.e. there is substantially no delay between the end of the first processing period and the initiation of the first measurement gap window.

A second processing period may follow the first measurement gap window. In some example embodiments, the end time of the first measurement gap window may be adjacent to the start time of the second processing period i.e. there is substantially no delay between the end of the first measurement gap window and the start of the second processing period.

In some example embodiments, the first processing period, the first measurement gap window and the second processing period are performed in sequence. In some example embodiments, the first processing period, the first measurement gap window and the second processing period are contiguous (in time).

In some example embodiments, the first measurement gap window is surrounded by a first processing period preceding the first measurement gap window and by a second processing period following the first measurement gap window.

In some example embodiments, the first processing period comprises a pre-guard interval/period. In some example embodiments, the second processing period comprises a post-guard interval/period. In some example embodiments, a pre-guard interval/period and a post-guard interval/period contiguously precede and follow the first measurement gap window respectively.

The network node 100 may further comprise means for providing 104, to the terminal device, a second measurement configuration information 105. The second measurement configuration information 105 may comprise scheduling a second measurement window for the terminal device to perform a second measurement. For example, the second measurement may be the same or similar to measurement 20; described above in relation to Fig. 2 i.e. the second measurement window may correspond to measurement window 22. In some example embodiments, the network node 100 may not have scheduling restrictions during the second measurement window.

The network node 100 may further comprise means for receiving 106, from the terminal device, first capability information 107. The first capability information 107 may be indicative of a capability of the terminal device to schedule a hardware adjustment period preceding or following a measurement window independently from the scheduling of the measurement window. For example, the first capability information 107 may be indicative of a capability of the terminal device to schedule the first and/or second hardware adjustment period independently from the scheduling of the second measurement window.

In some example embodiments, the first capability information 107 is indicative of a capability of the terminal device to schedule the hardware adjustment period (for example one or more of the first or second hardware adjustment periods) to be disjointed from the measurement window. For example, the first capability information 107 may be indicative of a capability of the terminal device 91 to schedule the first and/or second hardware adjustment period to be disjointed from the second measurement window.

The network node 100 may further comprise means for receiving 108, from the terminal device, second capability information 109. The second capability information 109 may be indicative of a capability of the terminal device to allow a hardware adjustment period preceding or following a measurement window to at least partially overlap with a processing period preceding or following a measurement gap window. For example, the second capability information 109 may be indicative of a capability of the terminal device to schedule the first or second hardware adjustment period to at least partially overlap with the first or second processing period.

The network node 100 may further comprise means for determining the configuration of the second measurement window at least partly based on the first and/or second capability information. For example, the configuration of the second measurement window may include start time, duration and/or end time of the second measurement window. The second measurement window may be configured such that the first hardware adjustment period is scheduled to at least partially overlap with the first or second processing period, or the second hardware adjustment period is scheduled to at least partially overlap with the first or second processing period.

In some example embodiments, the first and second capability information 107 and 109 are received though radio resource control signaling as part of one or more of a UECapabilityInformation, UEAssistanceInformation or RRCReconfigurationComplete message.

In some example embodiments, the terminal device schedules a first hardware adjustment period that precedes the second measurement window and a second hardware adjustment period that follows the second measurement window; and wherein the first hardware adjustment period is scheduled to at least partially overlap with the first or second processing period, or the second hardware adjustment period is scheduled to at least partially overlap with the first or second processing period.

In some example embodiments, the first and/or second hardware adjustment period comprise interruption periods that may be that same or similar to interruption periods 24a, 24b described above in relation to Fig. 2. For example, the first and/or second hardware adjustment periods may be used by the terminal device to tune one or more receive chains of the terminal device. In some example embodiments, the first and/or second hardware adjustment periods may correspond to VIL1 and/or VIL2 of NCSG.

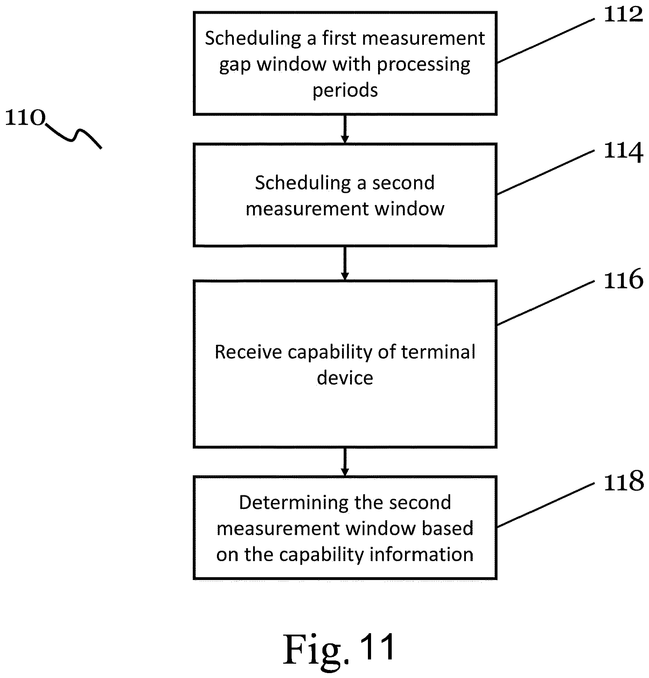

Fig. 11 shows a flow diagram, indicated generally by reference numeral 110, according to one or more example embodiments. The flow diagram 110 may indicate the operations performed by a network node (such as network node too described above in relation to Fig. 10). The operations may be performed by hardware, software, firmware or a combination thereof.

A first operation 112 may comprise providing, to a terminal device, a first measurement configuration information scheduling a first measurement gap window for performing a first measurement, wherein a first processing period precedes the first measurement gap window and a second processing period follows the first measurement gap window.

A second operation 114 may comprise providing, to the terminal device, second measurement configuration information scheduling a second measurement window for performing a second measurement.

A third operation 116 may comprise receiving, from the terminal device, first capability information indicative of the terminal device to schedule a hardware adjustment period preceding or following a measurement window independently from the scheduling of the measurement window. For example, the first capability information may be indicative of a capability of the terminal device to schedule the first and/or second hardware adjustment period independently from the scheduling of the second measurement window. In some example embodiments, the first capability information is indicative of a capability of the terminal device to schedule the hardware adjustment period to be disjointed from the measurement window. For example, the first and/or second hardware adjustment period is scheduled to be disjointed from the second measurement window.

The third operation 116 may comprise receiving, from the terminal device, second capability information indicative of a capability of the terminal device to allow a hardware adjustment period preceding or following a measurement window to at least partially overlap with a processing period preceding or following a measurement gap window. For example, the second capability information may be indicative of a capability of the terminal device to schedule the first or second hardware adjustment period to at least partially overlap with the first or second processing period. For example, the first hardware adjustment period is scheduled to at least partially overlap with the first or second processing period, or the second hardware adjustment period is scheduled to at least partially overlap with the first or second processing period.

A fourth operation 118 may comprise determining the second measurement configuration at least partly based on the first and/or second capability information. For example, the first hardware adjustment period is scheduled to at least partially overlap with the first or second processing period, or the second hardware adjustment period is scheduled to at least partially overlap with the first or second processing period.

In some example embodiments, communication with the terminal device is disallowed during the first measurement gap window, the first hardware adjustment period or the second hardware adjustment periods.

In some example embodiments, communication with the terminal device is allowed during the second measurement window.

### Example Apparatus

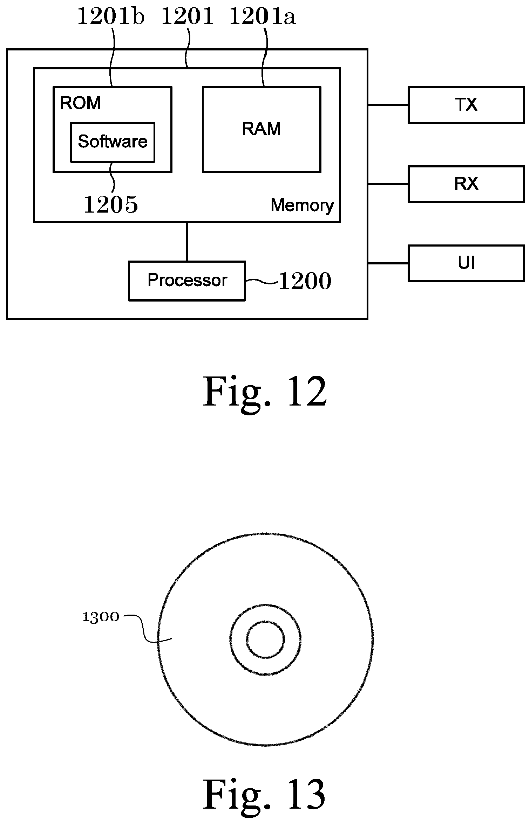

FIG. 12 shows an apparatus according to some example embodiments, which may comprise a terminal device or a network node. The apparatus may be configured to perform the operations described herein, for example operations described with reference to any disclosed process. The apparatus comprises at least one processor 1200 and at least one memory 1201 directly or closely connected to the processor. The memory 1201 includes at least one random access memory (RAM) 1201a and at least one read-only memory (ROM) 1201b. Computer program code (software) 1205 is stored in the ROM 1201b. The apparatus may be connected to a transmitter (TX) and a receiver (RX). The apparatus may, optionally, be connected with a user interface (UI) for instructing the apparatus and/or for outputting data. The at least one processor 1200, with the at least one memory 1201 and the computer program code 1205 are arranged to cause the apparatus to at least perform at least the method according to any preceding process, for example as disclosed in relation to the flow diagrams of FIGs. 6 and/or 11 and related features thereof.

FIG. 13 shows a non-transitory media 1300 according to some embodiments. The non-transitory media 1300 is a computer readable storage medium. It may be e.g. a CD, a DVD, a USB stick, a blue ray disk, etc. The non-transitory media 1300 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. A terminal device comprising:
means for receiving first measurement configuration information scheduling a first measurement gap window for performing a first measurement, wherein a first processing period precedes the first measurement gap window and a second processing period follows the first measurement gap window;
means for receiving second measurement configuration information scheduling a second measurement window for performing a second measurement;
means for performing the first and second measurements based on the first and second measurement configuration information respectively; and
means for scheduling a first hardware adjustment period preceding the second measurement window and a second hardware adjustment period following the second measurement window,
wherein the first hardware adjustment period is scheduled to at least partially overlap with the first or second processing period, or the second hardware adjustment period is scheduled to at least partially overlap with the first or second processing period.

2. A terminal device according to claim 1, wherein the first hardware adjustment period is scheduled to at least partially overlap with the first processing period and to be disjointed from the second measurement window.

3. A terminal device according to claim 1 or claim 2, wherein the second measurement window is configured to at least overlap with the second processing period.

4. A terminal device according to claim 1, wherein the second hardware adjustment period is scheduled to at least partially overlap with the second processing period and to be disjointed from the second measurement window.

5. A terminal device according to claim 4, wherein the second measurement window is configured to at least overlap with the first processing period.

6. A terminal device according to any preceding claim, wherein the first measurement is performed via a first receiver chain of the terminal device, and the second measurement is performed via a second receiver chain of the terminal device.

7. A terminal device according to any preceding claim, wherein the first and second measurements are measurements of neighboring cells for mobility.

8. A terminal device according to any preceding claim, wherein the terminal device further comprises: means for transmitting, to a network node, first capability information indicative of a capability of the terminal device to schedule a hardware adjustment period preceding or following a measurement window independently from the scheduling of the measurement window.

9. A terminal device according to claim 8, wherein the first capability information is is at least one of the following:
indicative of a capability of the terminal device to schedule the hardware adjustment period to be disjointed from the measurement window;
determined responsive to a radio resource control configuration of the terminal device; or
transmitted though radio resource control signaling as part of one or more of a UECapabilityInformation, UEAssistanceInformation or RRCReconfigurationComplete message

10. A terminal device according to any preceding claim, wherein the terminal device further comprises: means for transmitting, to a network node, second capability information indicative of a capability of the terminal device to allow a hardware adjustment period preceding or following a measurement window to at least partially overlap with a processing period preceding or following a measurement gap window.

11. A terminal device according to claim 10, wherein the second capability information is at least one of the following:
determined responsive to a radio resource control configuration of the terminal device.; or
transmitted though radio resource control signaling as part of one or more of a UECapabilityInformation, UEAssistanceInformation or RRCReconfigurationComplete message.

12. A network node comprising:
means for providing, to a terminal device, first measurement configuration information scheduling a first measurement gap window for performing a first measurement, wherein a first processing period precedes the first measurement gap window and a second processing period follows the first measurement gap window;
means for providing, to the terminal device, second measurement configuration information scheduling a second measurement window for performing a second measurement;
means for receiving, from the terminal device, first capability information indicative of a capability of the terminal device to schedule a hardware adjustment period preceding or following a measurement window independently from the scheduling of the measurement window; and
means for determining the second measurement configuration at least partly based on the first capability information.

13. A method comprising:
receiving first measurement configuration information scheduling a first measurement gap window for performing a first measurement, wherein a first processing period precedes the first measurement gap window and a second processing period follows the first measurement gap window;
receiving second measurement configuration information scheduling a second measurement window for performing a second measurement;
performing the first and second measurements based on the first and second measurement configuration information respectively;
scheduling a first hardware adjustment period that precedes the second measurement window and a second hardware adjustment period that follows the second measurement window,
wherein the first hardware adjustment period is scheduled to at least partially overlap with the first or second processing period, or the second hardware adjustment period is scheduled to at least partially overlap with the first or second processing period.

14. A method comprising:
providing, to a terminal device, first measurement configuration information scheduling a first measurement gap window for performing a first measurement, wherein a first processing period precedes the first measurement gap window and a second processing period follows the first measurement gap window;
providing, to the terminal device, second measurement configuration information scheduling a second measurement window for performing a second measurement;
receiving, from the terminal device, first capability information indicative of a capability of the terminal device to schedule a hardware adjustment period preceding or following a measurement window independently from the scheduling of the measurement window; and
determining the second measurement configuration at least partly based on the first capability information.
